# EUROPEAN PATENT SPECIFICATION

(11) **EP 0 486 973 B1**
(45) Date of publication and mention of the grant of the patent: **18.09.1996**
(21) Application number: 91119559.2
(22) Date of filing: 15.11.1991
(51) Int. Cl.: G07G 1/00, G07B 15/00, B64F 1/00

(54) **Traveler security and luggage control system**
Passagiersicherheits- und Gepäckkontrollsystem
Système pour la sécurité de passagers et le contrôle de bagages

(30) Priority: 20.11.1990 US 616026
(43) Date of publication of application: 27.05.1992
(73) Proprietor: SYMBOL TECHNOLOGIES, INC., Bohemia New York 11716-3300 (US)
(72) Inventor: Bravman, Richard, Smithtown, New York 11787 (US); Toedt III, D.C., Houston,Texas 77005 (US); Vingsbo, Stefan G., Houston,Texas 77027 (US)
(74) Representative: Wagner, Karl H., Dipl.-Ing.

(56) References cited:
- EP-A- 0 065 056
- DE-A- 2 450 567
- US-A- 4 711 994

## Description

### 1. BACKGROUND OF THE INVENTION

The present invention relates to apparatus for utilizing scanners (e.g., contact scanners or laser-beam scanners) in conjunction with optical read-only memories (e.g., "bar codes") to achieve various useful results in the travel industry.

With respect to the prior art attention is drawn to US-Patent 4,711,994 from which a method and its associated system is known for maintaining a close and accurate security surveillance of both the passengers and their baggage on a public conveyance, to insure, that, before departure, baggage is not loaded aboard the conveyance without a prior, positive indication that the owner or the passenger has, in fact, been properly boarded.

The invention relates to a boarding security system as referred to in claim 1.

Preferred embodiments of the invention are disclosed in the dependent claims.

### 2. SUMMARY OF THE INVENTION

In an illustrative system, a bar code is used to identify a traveler's luggage, permitting the luggage to be tracked and, if desired, to be delivered to the traveler's ultimate destination (e.g., a hotel). If the traveler is traveling on an airline, a corresponding bar code is applied to the traveler's boarding pass. A bar code reader is used to read the boarding-pass bar code of each emplaning passenger; comparison of these bar codes with luggage bar-code data permits an alarm to be raised if each item of checked luggage is not matched by an emplaned passenger. The boarding-pass bar code may take the form of an integrated passenger identification code for use by, e.g., rental car companies, hotels, and the like.

### 3. BRIEF DESCRIPTION OF THE DRAWINGS

Figure 1 is an electrical diagram in block form of a communication system featured in certain embodiments of the invention.

Figure 2 is a timing diagram showing events (RF transmission) vs. time for a data transmission sequence in the illustrative system of Figure 1.

Figure 3 is a more detailed electrical schematic diagram in block form of the host computer and one of the base stations in the illustrative system of Figure 1.

Figure 4 is a more detailed electrical diagram in block form of one of the remote terminals in the system of Figure 1.

Figure 5 is a sectional view of a hand-held bar code scanner unit which may be used as a remote terminal in certain embodiments of the invention.

Figure 5a is a pictorial view of another type of bar code reader which may be used as a remote terminal instead of or in addition to the scanner of Figure 5.

Figure 6 is a view of a part of a bar code symbol that may be read by the remote unit of Figures 4 and 5 or 5a, and a timing diagram of the electrical signal produced thereby.

Figures 7 through 12 are logic diagrams outlining certain logical functions performed by systems and subsystems in accordance with the invention.

Figure 13 is a depiction of an integrated customer identification device used in an embodiment of the invention.

### 4. DETAILED DESCRIPTION OF SPECIFIC EMBODIMENTS

A number of specific embodiments of the invention are described here. It will be understood that these embodiments are presented for purposes of illustration and not as limiting the scope of the invention a claimed below.

### 4.1 Overview of Data Communications Network

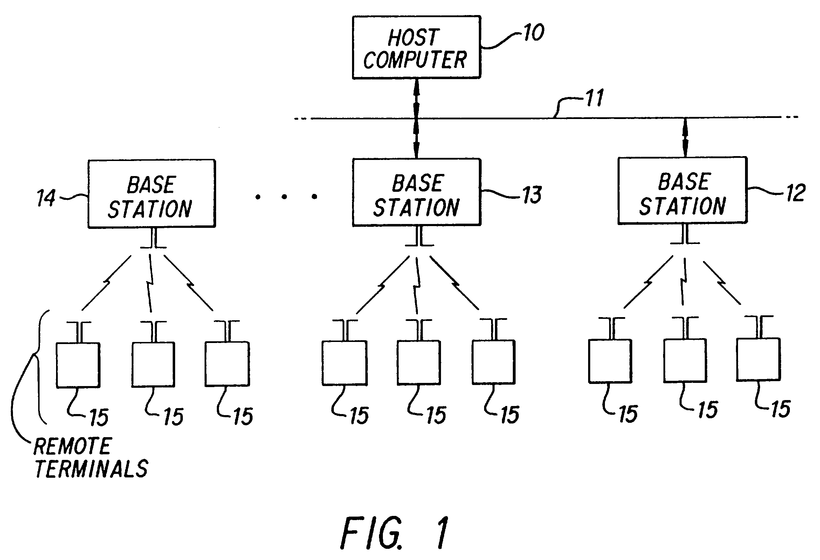

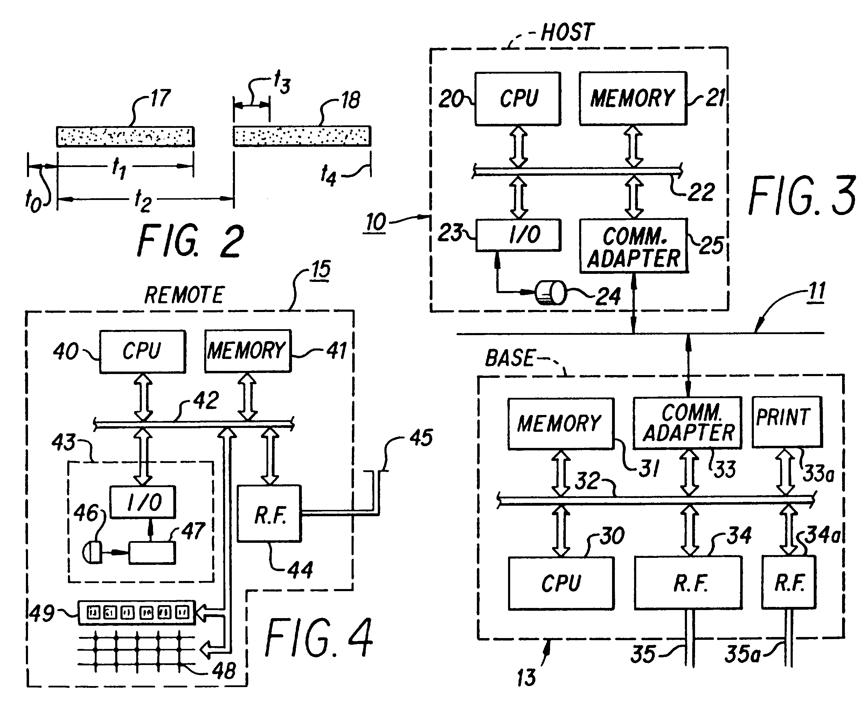

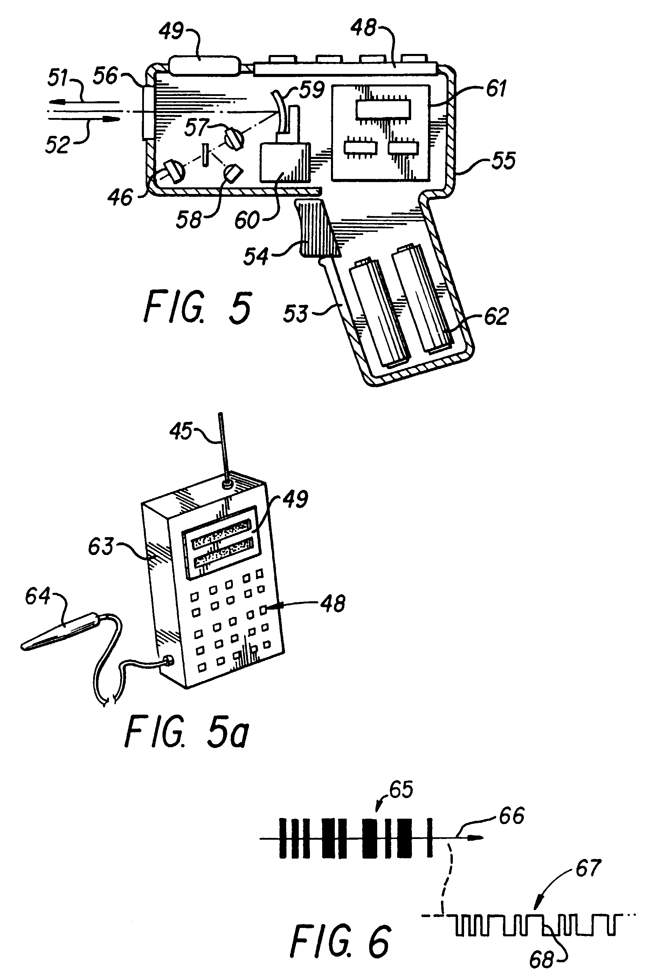

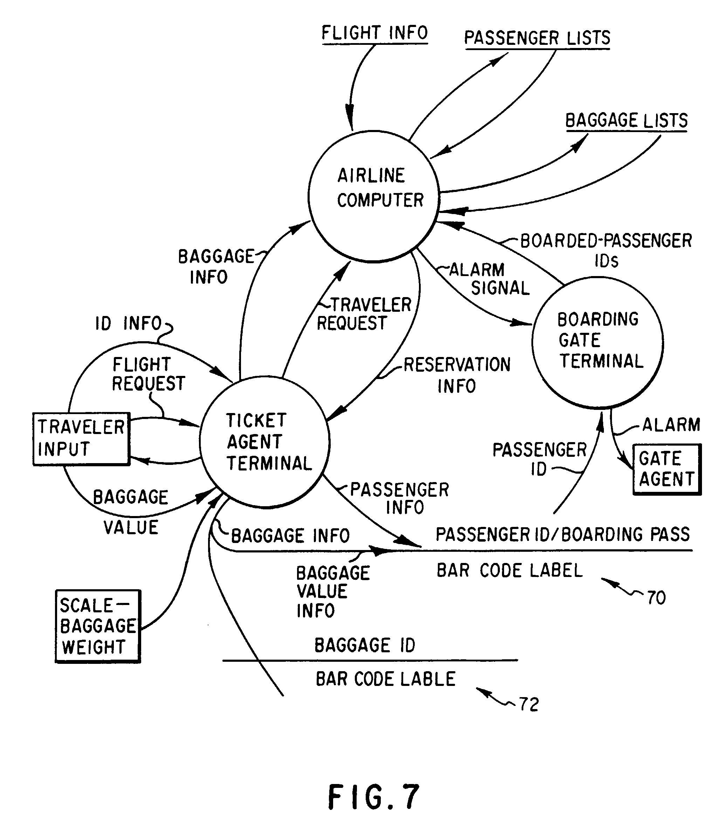

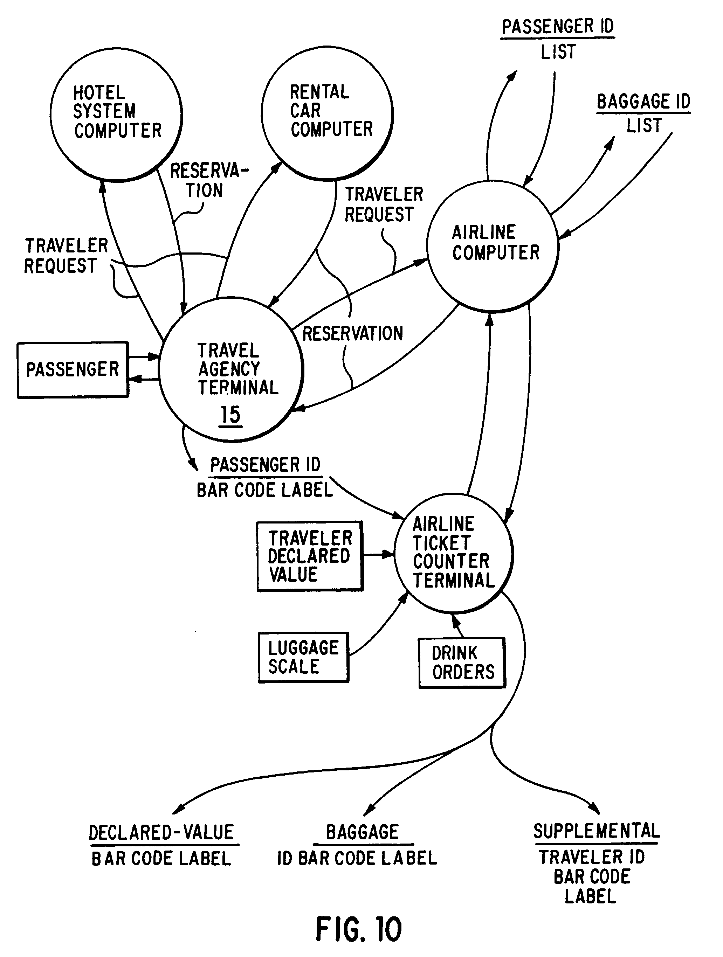

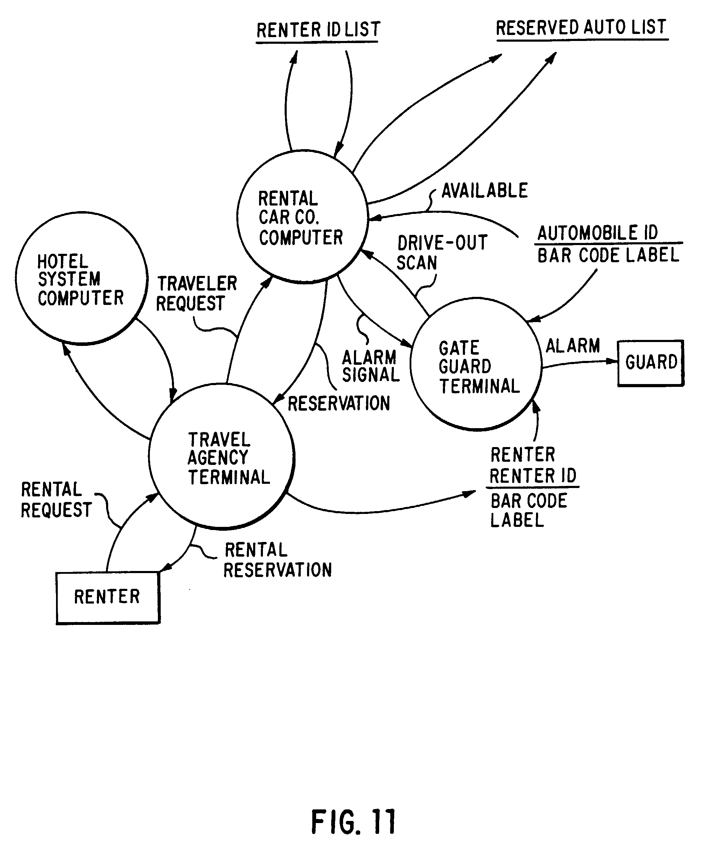

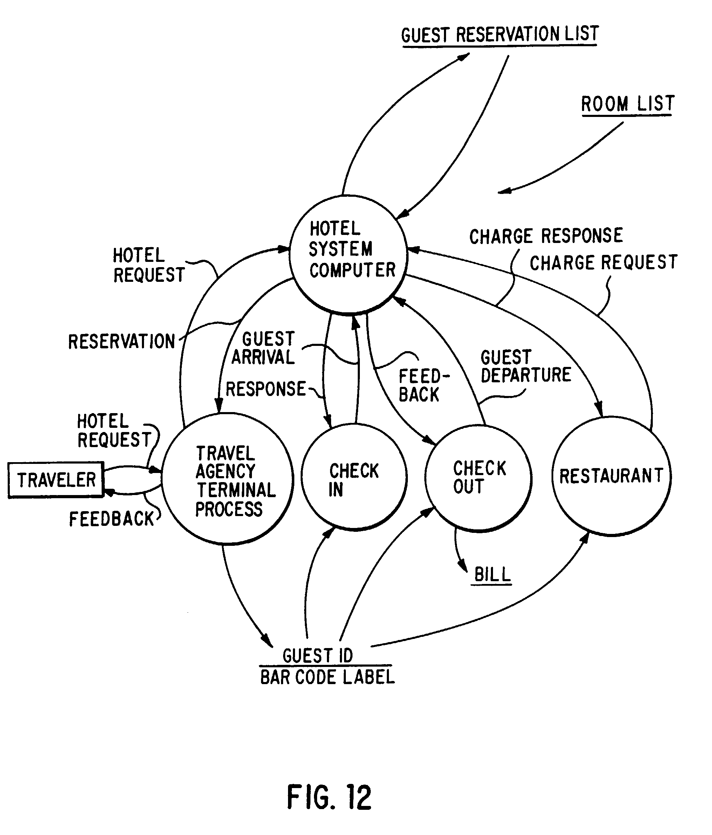

It is helpful to survey some of the basic hardware and software component types and architecture types used in the illustrative embodiments described here.
**(a) Network Architecture.** Referring to Figure 1, an exemplar data communications network is shown; the network is described in more detail in the commonly assigned co-pending application Serial No. 374,452, PACKET DATA COMMUNICATION NETWORK, filed June 29, 1989. A host processor 10 is connected by a communications link 11 to a number of base stations 12 and 13; other base stations 14 can be coupled to the host through the base stations 12 or 13 by an RF (radio frequency) link. Each one of the base stations 12, 13, or 14 is coupled by an RF link to one or more remote units 15 (sometimes referred to for convenience herein as "terminals" or "readers"). The RF link utilizes a protocol, a timing diagram of which is depicted in Figure 2 as explained in more detail in the aforementioned co-pending application. Alternatively, the remote units 15 may be connected to the host processor 10 by physical wiring, perhaps via one or more intermediary units 12, 13, or 14.
   In one embodiment of the invention, the remote units 15 are laser-scan barcode readers of the hand-held, battery-operated type, for example, as disclosed in U.S. Patents No. 4,387,297; 4,409,470; or 4,760,248, all commonly assigned with this application to Symbol Technologies, Inc. Various other types of remote terminals may be advantageously employed in a system in accordance with the invention; these remote terminals would ordinarily include data entry facilities such as a keyboard or the like, as well as a display (or printer) for indicating to a user information detected, transmitted, and/or received by the remote unit 15.
   In the embodiment used as an illustrative example, there may be from one up to 64 of the base stations 12, 13, and 14 (three being shown in the Figure), and up to several hundred of the remote units 15. Of course, the network may be expanded by merely changing the size of address fields and the like in the digital system.
   Although hand-held, laser-scan type bar-code readers are mentioned here by way of example, the terminals 15 may also be bar-code readers of the wand type, and except as may be otherwise mentioned below may be stationary rather than hand-held. In other embodiments, the device may be of the optical character recognition (OCR) type as well.
**(b) Host Computer and Base Station(s).** Referring to Figure 3, one typical host-computer architecture is shown. The host processor 10 maintains a database management system (DBMS), employing suitable database management software similar to that commercially available, to which the remote units 15 make entries or inquiries via the base stations 12, 13, and 14. The host processor 10 has a CPU 20 which may be a microprocessor device of the 80386 type manufactured by Intel Corporation, for example, and the CPU accesses a memory 21 via a main bus 22 to execute instructions. Various I/O processors 23 are used to access peripherals such as keyboard, video display, etc., as well as disk storage 24 for the database system and other computer functions. A communications adapter 25 couples the CPU 20 via the main bus 22 to the link 11. This communications link 11 may be of the serial type such as RS-232, or alternatively the link 11 may use one of the available local area network (LAN) type of protocols.
   The base stations 12, 13, and 14 each utilize a CPU 30 which accesses a memory 31 via a local bus 32, also seen in Figure 3. This data processing unit is coupled to the serial link 11 via a communications adapter 33. A printer 33a may be included which may be driven by the CPU 30 via the local bus 32 to print data from the memory 31. An RF transceiver 34 is coupled to the CPU 30 in each base station via the local bus 32 and is connected to an antenna 35 for RF transmission to and reception from the remote units 15. An additional RF transmitter 34a may be used, as well, as an RF link to and from other base stations, if necessary. An example of a commercially-available microprocessor device which may be used as the CPU 30 is a V-25 device manufactured by NEC Corporation, which is the same device used in the remote units 15.
   The base stations 12, 13, and 14 are ordinarily located in various rooms or bays of the commercial establishment containing the network of Figure 1. The RF signal path in this environment is changeable in nature as equipment, fork-lift trucks, furniture, doors, etc., are moved about, or as the user moves from place to place and carries the hand-held remote unit with him, or as the network is expanded or reduced in size; there is a high degree of multipathing in this type of RF link. Thus, the particular one of the base stations communicating at a given time with one of the remote units 15 may change; to this end a "hand-off" protocol may be utilized as described in the co-pending application to change the base station which is designated to handle a remote unit. In this manner, a remote unit 15 has a confirmed link with only one base station at a time, although other base stations may be within range of the remote unit 15.
   The base station 12, 13, or 14 is merely an intermediary. The remote unit is communicating with the host processor 10, and the function of a base station is merely to relay data from a remote unit to the host computer or vice versa. In some installations there may be only one base station, in which case the communications link 11 may be a direct connection via an RS-232 serial port and cable or, if the building is such that the base station can be mounted at the same location as the host computer, the link 11 may be replaced by a parallel bus-to-bus interface, in which case the base station and host computer may be considered a single unit.
**(c) Remote Terminal Units.** Referring to Figure 4, each remote unit 15 in the example embodiment is a data terminal (e.g., a hand-held bar code reader) having a CPU 40 executing instructions from a program and data memory 41 which is coupled to the CPU via a local bus 42. A peripheral bar code data acquisition device 43 is coupled to the CPU via the bus 42 and is used to detect and/or convert data from the bar code scanning section to be stored in the memory 41 and processed by the CPU 40; other control devices may interface with a keyboard and display. An RF transceiver 44 is coupled to and controlled by the CPU via the bus 42, and transmits the coded RF signal through an antenna 45 or detects and converts RF received by the antenna, according to a protocol. In an alternative embodiment, the terminal unit 15 may be connected with the host computer 10 via a conventional electrical or optical cable. Usually the remote unit 15 has a manual data entry device such as a keyboard 48, and a visual display 49 such as an LCD device.
   Although other data terminal units 15 may be advantageously employed in a system having features of the invention, a hand-held, laser-scan, bar code reader unit as illustrated in Figure 5 is an example of a remote unit particularly suited for use in the system of Figure 1. This hand-held device of Figure 5 is generally of the style disclosed in U.S. Patents No. 4,760,248, 4,806,742, or 4,816,660, commonly assigned with this application to Symbol Technologies, Inc., and also similar to the configuration of a bar code reader commercially available as part number LS 8100II from Symbol Technologies. Alternatively, or in addition, features of U.S. Patents No. 4,409,470 or 4,816,661 may be employed in constructing the bar code reader 15 of Figure 4. The aforementioned patents are incorporated herein by reference.
   Referring to Figure 5, an outgoing light beam 51 is generated in the reader 15, usually be a laser diode or the like, and directed to impinge on a bar code symbol a few inches from the front of the reader unit. The outgoing beam 51 is scanned in a fixed linear pattern, and the user positions the hand-held unit so this scan pattern traverses the bar code symbol to be read. Reflected light 52 from the symbol is detected by a light-responsive device 46 in the reader unit, producing serial electrical signals to be processed for identifying the bar code. The reader unit 15 is a gun-shaped device having a pistol-grip type of handle 53, and a movable trigger 54 is employed to allow the user to activate the light beam 51 and detector circuitry when pointed at the symbol to be read, thereby saving battery life if the unit is self-powered. A lightweight plastic housing 55 contains the laser light source, the detector 46, the optics and signal processing circuitry, and the CPU 40 and RF transceiver 44 of Figure 4, as well as a battery. A light-transmissive window 56 in the front end of the housing 55 allows the outgoing light beam 51 to exit and the incoming reflected light 52 to enter.
   Also seen in Figure 5 in connection with the remote unit 15 are a lens 57 used to collimate and focus the scanned beam into the bar code symbol at the proper depth of field; a light source 58 such as a semiconductor diode; an oscillating mirror attached to a scanning motor 60 which is activated when the trigger 54 is pulled. The electronic components of Figure 3 are mounted on one or more small circuit boards 61 within the housing 55 of Figure 4, and batteries 62 are enclosed to provide a self-contained portable unit. The antenna 45 may be printed on one of the circuit boards 61.
   Referring to Figure 5a, another embodiment of a remote terminal 15 is illustrated wherein a wand-type bar code reader is employed instead of the laser scanner of Figure 5. The device of Figure 5a is similar to a commercially available portable radio terminal sold under the product name "MSI PRT" by MSI Data Corporation, of Costa Mesa, California, a subsidiary of Symbol Technologies, Inc., which is the assignee of this application. The keyboard 48 and display 49 are mounted at the face of a hand-held housing 63, and the light source 58 (in this case an LED, for example) and light detector 46 (not seen in Figure 5a) are mounted within a pencil-shaped wand 64 connected to the housing 63 by a cable. The person using the device of Figure 5a holds the housing 63 in one hand and the wand 64 in the other, and moves the wand 64 across the bar code symbol, in contact with the symbol, instead of holding the unit steady (spaced from the symbol) and relying upon the oscillating mirror to generate the scan of the symbol as is the case for the embodiment shown in Figure 5. Otherwise, the device of Figure 5a contains the circuitry of Figure 4, and the RF link operates in the same way.
**(d) Bar Code Labels.** In some of the applications described below, a conventional bar code such as the well known Code 39 (for example) may be used. In other applications, it is particularly advantageous to utilize a high-density, two-dimensional bar code symbology similar to that disclosed in the commonly assigned co-pending application Serial No. 461,881, by Pavlidis et al.
**(e) Software for System Control.** Figures 7 through 12 set forth flow-chart logic diagrams of certain database management functions and the like that are performed by the illustrative embodiments. Those skilled in the art will appreciate that the actual optimum organization and structure of software to control various hardware components in accordance with the invention will depend greatly on the characteristics of the specific hardware with which the invention is implemented, and likewise that functions shown as implemented in software can equivalently be implemented in, e.g., discrete-logic hardware and vice versa. By and large, the flow charts do not set forth common error trapping/handling, boundary condition detection, and similar conventional functions.

### 4.2 Boarding Pass/Luggage Cross-Checking System

Airline security may be promoted using one embodiment of the invention. One security problem with which airlines must attempt to contend is that of the terrorist who checks luggage for a flight but who does not board the flight because he or she knows that the checked luggage contains a bomb set to explode in flight. One known approach to combatting this threat is to refuse to check luggage except from ticketed passengers.

Referring to Figure 7 (a Yourdon-DeMarco data flow diagram), a novel ticketing system may augment this approach by reducing the likelihood that persons who check luggage will subsequently fail to board the flight without being detected. The ticketing system may include a terminal 15 generally of the kind described above and located, e.g., at an airline ticket counter. A ticketing agent may use the terminal 15 to enter information relating to e.g., the passenger's origination and destination points, scheduled departure and arrival times, and the like.

Notably, the terminal 15 is used to enter a passenger identification code that may be assigned by the airline or other carrier at check-in time. The passenger identification code may be the next available number from a convenient series of number, or it may be derived in any convenient manner, e.g., by using a suitable hashing function that takes as inputs one or more of the flight information, the passenger's name or social security number, and the like. In one embodiment, the memory 31 of the base station 12, 13, or 14 may include instructions for the CPU 30 to generate a passenger identification code; the information used in the generation process may be obtained from the remote unit 15 and/or from a flight-information data file 74, for example, maintained by the host computer 10 in disk storage 24.

The printer 33 is used to print a bar code label 70 on a boarding pass or alternatively on a stick-on label to be applied to a boarding pass. The bar code label 70 includes the aforementioned passenger identification code as well as any other desired information, e.g., the passenger's name, address, seat assignment, advance beverage orders, information about any special handling required for the passenger (e.g., special meals), connecting-flight information, and the like. The aforementioned 2D bar code symbology is particularly useful in such applications.

Referring still to Figure 7, the passenger identification code is also printed in a bar code 72 on a luggage tag (or on a stick-on label to be applied to a luggage tag) that is attached (e.g., at the ticket counter) to any luggage being checked by the passenger. The bar code 72 may also include the passenger's name, address, and the like for quick identification and passenger notification in the event the luggage goes astray. If the bar code is of sufficient capacity, the ticket agent may additionally enter a brief description of each piece of luggage at the terminal, perhaps using appropriate menus of luggage descriptions. This information may be included in the boarding-pass bar code 70 as well as in the luggage bar code 72.

For security purposes, the information stored in the bar codes 70 and 72 referred to above can be encrypted, and/or the bar codes can include a checksum or similar code, in any convenient manner, to make forgery and/or unauthorized information access more difficult.

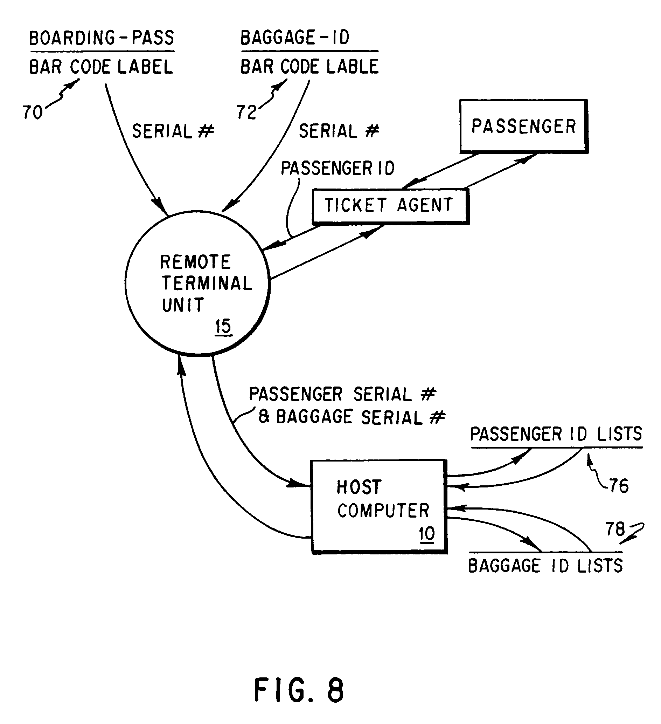

Referring now to Figure 8, in an alternative embodiment the boarding passes are preprinted with bar-coded passenger identification codes 70 (e.g., boarding pass serial numbers). Similarly, numbered ticket-counter luggage tags, of the kind customarily fastened on bags when the bags are checked, may be preprinted with bar-code serial numbers 72. The ticket agent may use a fixed counter-mounted scanner (not shown) or a hand-held reader such as those shown in Figures 5 or 5a to scan a boarding pass bar code 70 and all associated luggage tag bar codes 72; the host computer 10 may be programmed to receive the data from these scans and to create an association between the passenger and his or her checked bags in one or more data files such as, for example, a passenger ID file 76 and/or a baggage ID file 78.

In another alternative embodiment, the ticket agent may be equipped with peel-off/stick-on bar code labels of two kinds. The first kind includes bar codes of passenger identification codes 70, to be peeled off and applied to boarding passes that did not already have a passenger identification code printed thereon. The second kind includes bar codes of luggage identification codes 72, to be peeled off and applied to luggage tags that did not already have such bar code labels. The specific bar codes allocated to a given passenger are scanned as described above to create an association between the passenger and his or her checked bags in the data files 76, 78 maintained by the host computer 10.

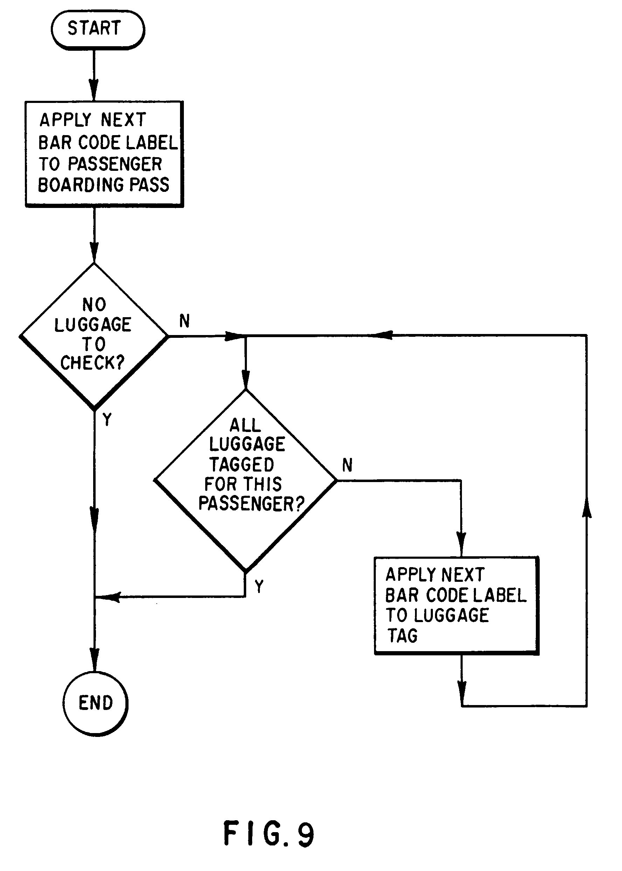

In still another alternative embodiment, a single kind of peel-off/stick-on bar code labels 70, numbered in a convenient sequential series (e.g., consecutive numbers, odd numbers, even numbers, every five numbers, etc.), are used. As illustrated in Figure 9, when a passenger presents bags to be checked, (1) the next available numbered bar code label is applied to his or her boarding pass; (2) numbered bar code label are applied in numerical sequence to each bag being checked by that passenger or to a luggage tag fastened thereto as described above; and (3) when all of that passenger's bags have been so labeled, the next available numbered bar code label is applied to the boarding pass. The serial numbers of the two bar codes on the passenger's boarding pass thus bracket (and thereby define a list of) the serial numbers of the bar codes applied to that passenger's checked luggage. The ticket agent may therefore scan the two boarding-pass bar codes 70 in the manner described above to identify the bags checked by the passenger in the data filers maintained by the host computer 10; alternatively, each bag's bar code can be scanned for the same reason. For convenience, this alternative embodiment is referred to below as the "bracketing boarding-pass bar codes" embodiment.

It will be appreciated by those having the benefit of this disclosure that the "boarding pass" can be any convenient carrier for the bar codes described above.

### 4.3 Passenger-Boarding Security System

At the boarding location (e.g., an airline boarding gate), a boarding verification system includes a remote terminal unit 15 that is linked to the host computer 10. Each passenger presents his or her boarding pass to a gate agent/operator who scans the bar code 70 using a reader such as shown in Figure 5 or 5a in conjunction with e.g., a terminal unit 15 and, e.g., a base station 12, 13, or 14 (or alternatively using a fixed terminal 15 that has a landline-type link to the host computer 10). The terminal 15 transmits the passenger identification codes of boarded passenger to the host computer 10 either individually or in batch, as convenient. For example, the terminal 15 may be used to transmit this information in a batch after all passengers have boarded but just prior to closing up the aircraft for departure.

The host computer 10 compares those codes 70 with a list of passenger identification codes 70 associated with checked luggage for the flight in question in the computer's data files, e.g., in data files 76 and 78. If the computer 10 determines that some piece of checked luggage is not associated with a boarded passenger, a security alarm is transmitted, possibly to the display 49 of the terminal 15 and/or to a security station and/or to the luggage handling office. The alarm may include the above-mentioned description of the luggage in question to facilitate identification and segregation of the luggage (e.g., for examination by bomb-squad personnel).

If the bracketing boarding-pass bar code embodiment is in use, the host computer 10 retrieves data from its data files and builds a list of all serial numbers 70 and 72 assigned to passengers and bags that were checked for the flight in question as described above. Each consecutive series of serial numbers 72 assigned to checked bags should be matched by bracketing serial numbers 70 assigned to a boarding pass. If any boarding-pass serial numbers 70 are missing from the list at departure time, it follows that a passenger may have checked his or her bags but failed to have his or her boarding pass scanned at the boarding gate. The host computer 10 may then generate an appropriate alarm signal as described above.

A distributed-processing embodiment may also be used, as will be appreciated by those of ordinary skill having the benefit of this disclosure. The functions of the host computer 10 may be carried out by a base station 12, 13, or 14 at the boarding gate. The host computer 10 may download passenger and baggage data for the flight in question to the base station for temporary storage, e.g., in the memory 31 (or alternatively in disk storage, not shown in the Figure). The CPU 30, suitably programmed, may then perform the checking described above to determine whether any unaccompanied baggage was checked aboard the aircraft.

### 4.4 In-Flight Passenger Management System

The remote terminal 15 used at the boarding gate may conveniently be carried on the aircraft itself and operated by the flight attendants or other personnel. Information scanned from boarding-pass bar codes 70 at the boarding gate may be stored in the memory 41 of the terminal 15; with suitable programming the terminal 15 may in turn be conveniently used as a stand-alone unit by flight attendants in flight to determine the names, meal preferences, advance beverage orders, connecting flight information, etc., of passengers sitting in various seats.

Alternatively, or in addition, the aircraft may carry its own base station 12, 13, or 14. While the aircraft is parked at the gate, the base station may be linked with an airline host computer 10 via the link 11. Information of the kind described above may be downloaded to the base station directly from the host computer for storage in the memory 31 of the base station; the terminal 15 may then be used in flight by the flight attendants in conjunction with the base station in a manner similar to that described above.

### 4.5 Luggage Security System

In baggage claim areas, security guards are frequently used to read and compare preprinted serial numbers on luggage claim checks with similar serial numbers on check-in tags placed on the luggage at the origination point. This helps reduce the chances that a passenger will reclaim the wrong luggage or that thieves will steal luggage.

In an improved luggage security system, such a security guard may be equipped with a suitably programmed terminal 15 and/or with a base station 12, 13, or 14. Instead of attempting to read serial numbers the guard can scan the bar code 70 on an arriving passenger's boarding pass and the bar code(s) 72 on the luggage being carried out by the passenger. If the bracketing boarding-pass bar code embodiment is used, the scanner/terminal need only determine whether the luggage bar codes 72 are bracketed by the two boarding-pass bar codes 70. In the event of a mismatch, an alarm signal is generated, e.g., on the display 49 of the terminal 15, allowing the security guard to investigate further.

Unclaimed luggage can conveniently be identified by airport or airline personnel, without opening the luggage, by scanning the luggage bar code 72. If the bar code 72 includes the passenger's name and address, it can be read by scanning it with a remote terminal 15; alternatively, the luggage identification information encoded into the bar code 72 may be passed on to a host computer 10, e.g., via a base station 12, 13, or 14 if used; the host computer 10 then identifies the passenger in question through a conventional lookup into its data files, e.g., files 76 and 78. This information can enable the owner to be contacted (or, if the luggage has been misrouted to the wrong airport, to redirect it to the proper destination).

### 4.6 Luggage Delivery System

A passenger who checks luggage at a ticket counter may desire to have the luggage delivered to his or her hotel, office, home, or other destination. This could present an attractive alternative to carrying on large hanging bags, for example, or to checking luggage and being forced to wait 30 minutes to an hour at the destination airport to reclaim the checked luggage.

The system described above may be used advantageously to implement such an alternative. Information about the desired delivery destination, e.g., the address, may be entered by the ticket agent using the ticketing terminal 15; alternatively, this information may be taken by a travel agency and entered using a travel agency terminal 15 as described below. The destination information may be included in the luggage bar code 72, which may be printed on a readily distinguishable stock (e.g., stock of a particular color or an especially bright color, etc.) to facilitate sorting at the destination airport.

When luggage from different flights arrives at a destination airport, luggage to be delivered is separated from luggage to be reclaimed at the baggage-claim area and placed temporarily in a receiving area. The luggage bar codes 72 for the various luggage pieces are scanned to obtain their delivery-destination information, e.g., by a remote terminal 15 upon arrival in the receiving area. A host computer 10 linked to the terminal 15 maintains a current list of luggage to be delivered and the destinations thereof, e.g., in a data file system such as data files 76 and 78, possibly keyed to destination identifying data such as nine-digit ZIP codes, hotel names, or similar identifiers. If desired, a human-readable notation about the destination may be made by hand on the luggage tag for convenience.

Periodically (say, once per hour), the host computer 10 causes one or more lists to be printed of luggage to be delivered, sorted by destination into delivery groups. Each delivery group may be assigned to a van or other vehicle, in all likelihood several delivery groups to a vehicle. Using the lists as pick lists, delivery personnel load luggage into the appropriate vehicle. A terminal 15 is used to scan each bag's bar code 72 and transmit its identifying information to the host computer 10, which notes the fact that the bag has left the airport. The terminal's display 49 may be used to view the bag's destination as encoded in the bar code 72, thus providing a check that the bag is about to be taken to the correct destination.

At each hotel or other destination, delivery personnel or hotel service personnel (e.g., a bellman) unloads the luggage for that destination. A terminal 15 is used as described above to verify that each bag is being unloaded at the correct destination. This information may be transmitted by the terminal 15 to a host computer 10 in the delivery vehicle, or alternatively through an appropriate radio, cellular, or other link to the host computer 10 at the airport.

At the hotel, service personnel (e.g., a bellman) may use a terminal 15 to scan a bag's bar code 72 to obtain the passenger identification code of the bag's owner. The terminal 15 is linked with a hotel host computer 10, e.g., via a base station 12, 13, or 14 if used. If the owner has checked into the hotel using his or her passenger identification code as described below, the bellman may use the terminal's display 49 to display the bag owner's room number; he may make a hand-written notation on the bag's luggage tag, and the bag may be delivered directly to the room.

Again, the functions performed by the host computer 10 may equally well be performed by the CPU 30 and associated equipment of the base station 12, 13, or 14, with downloading of data as needed from the host computer 10.

### 4.7 Luggage Declared-Value Record Device

Lost or damaged luggage is sometimes valued for compensation purposes as a function of the weight of the luggage unless the passenger declares a higher value and pays a fee. The ticket agent can query the passenger at check-in time about any higher value which the passenger wishes to declare for the luggage. This information and the weight of each bag (which may be obtained from a scale, not shown) may be included in the printed bar codes 72 and 70 on both the luggage and the passenger's boarding pass. Alternatively, to prevent unauthorized persons from scanning the luggage bar code in search of high-value pilferage targets, the declared value information maybe printed solely in the boarding-pass bar code 70. The ticket agent may of course collect additional fees from passengers who declare luggage values in excess of predetermined limits.

Passenger claims for lost luggage can be processed expeditiously by using a terminal 15 to scan the boarding-pass bar code 70 and thereby ascertain the previously recorded weight of each bag and the value declared by the passenger as well as the passenger's name and address. Passengers can conveniently make such claims by mail by sending the original boarding pass to an airline claim office. The passenger may retain a photocopy of the boarding pass, including the bar code 70, for his or her records in case a dispute arises; the bar code 70 will of course be duplicated on the photocopy and thus can be scanned in the same manner as on the original boarding pass. Colored stocks and inks can be used in the usual manner to distinguish original boarding passes from photocopies.

### 4.8 Integrated Travel Information and Control System

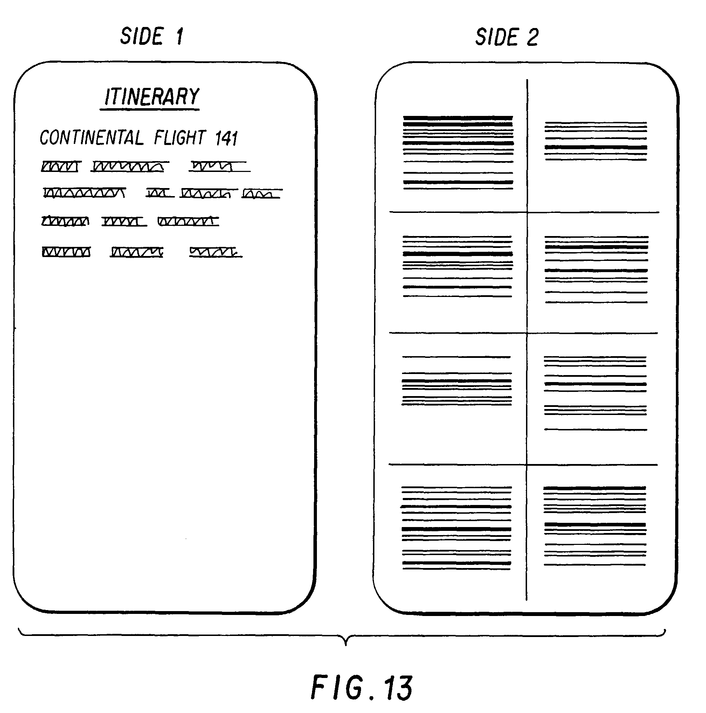

The traveler security and luggage control system described above can be expanded to provide improved convenience for travelers. By way of background, it will be noted that travel agencies are frequently used by business travelers to make advanced booking of airline flights, rental cars, and hotel rooms. Travel agencies typically provide their traveler-customers with pocket-sized folders containing airline tickets and a detailed itinerary including rent car and hotel information. Boarding passes are often included in such folders.
**(a) Link to Airline Reservation Computer.** Referring to Figure 9, a travel agency terminal 15, including or linked with a base station 12, 13, or 14 if used, may include a printer such as the printer 33a capable of printing bar codes. The terminal 15 may be linked, e.g., via a landline, to an airline computer 10 that handles airline reservations and ticketing for travel agencies. The terminal 15 may be programmed in a manner known to those of ordinary skill to allow it to be used by a travel agent to make a flight reservation and obtain an advance seat assignment for a traveler in the conventional manner; the airline computer 10 returns a message including reservation and seat assignment information to the terminal 15 in a conventional manner.
   The host computer 10 also returns a message (which of course may be a part of the message mentioned above) that includes a passenger identification code to the terminal 12. Travel agency personnel may then operate the printer to print a traveler ID bar code 101, e.g., on boarding-pass stock, generally in the manner described above. The traveler ID bar code 101 may be a consolidated one that includes the passenger identification code and other information as described herein to the extent such information is known at the time.
   The travel-agency customer may desire to check luggage at the airline ticket counter. The airline ticket agent may scan the customer's traveler ID bar code as described above to obtain the customer's passenger identification code and other pertinent information, and print such information on luggage-tag bar codes 72 as described above. Furthermore, if the customer desires to declare a value for the luggage, in a supplemental baggage-value bar code 103, e.g., on a stick-on label to be applied to the boarding pass. In the process, the ticket agent could inquire of the customer about advance beverage orders, special meal orders, and the like in the manner described above.
**(b) Hotel and Rental-Car Links.** The travel agency terminal 15 may additionally be linked to either or both of a rental car company computer 10 and a hotel system computer 10. When the travel agency terminal 15 is used to make reservations for a rental car or a hotel room, the rental-car or hotel computer 10 returns a message to the terminal 12 that includes a customer identification code in generally the same manner as described above for airline passenger identification codes. The traveler ID bar code printed on the customer's boarding pass may then include information required by the hotel or rental car company in question, e.g., name, address, credit card information, driver's license number, and the like. Of course, if a standardized system is used for assigning identification codes, a single traveler ID code could be used as the airline passenger identification code, the hotel customer identification code, etc.
   The traveler ID bar code is used in conjunction with one or more customer check-in terminals 15 at, e.g., a rental car customer service counter or a hotel registration desk. When the customer arrives at the counter or registration desk, he or she presents his boarding pass or other record device to the attendant, who operates the terminal 12 to scan the bar code on the boarding pass. The attendant may ask the customer for confirmatory identification, e.g., a driver's license, and operate the terminal (e.g., by pressing an ENTER key) to confirm the check-in of the customer. Alternatively, the customer himself could hold up the bar code in front of a fixed terminal 15 for comparatively unattended operation.
   A hotel restaurant, gift shop, golf pro shop, executive office suite, or similar ancillary business may operate customer charge stations in conjunction with the boarding-pass bar code. A customer charge terminal 15 is linked with a hotel host computer 10, e.g., via a base station 12, 13, or 14 if used. The hotel host computer 10 in turn is linked with the hotel's customer check-in terminal 15. When a customer checks in by presenting a boarding pass as described above, the host computer 10 notes the fact along with any other desired information such as the customer's credit limit. The customer may make charges by presenting his or her boarding pass; the bar code on the boarding pass is scanned by the terminal operator and the appropriate charge information is passed to the host computer 10 to be added to the customer's bill.
**(c) Integrated Customer Identification Device.** As described above, the bar code is printed on a single record device that is referred to for convenience as a "boarding pass." This record device may take the form of a card of convenient size, e.g., about the size of a standard computer punch card, and made of stiff cardboard stock or similar material.
   In one embodiment shown in Figure 13, a first side of the card includes a printed itinerary, perhaps printed in a small but readable font on a conventional laser printer; the other side of the card may include partitions in which bar codes may be printed or applied as stick-on labels, in much the same manner as exit and entry stamps are applied to partitioned sections of passport pages at customs control points. The partitions may be labeled "Airline 1," "Airline 2," "Hotel 1," etc., as shown in Figure 5. In another embodiment, the partitions are unlabeled to allow maximum flexibility in the application of bar codes. A traveler would then conveniently be able to carry his tickets, boarding passes, rental car and hotel check-in identification, baggage claim checks, and the like, in a single convenient record device.
   In another embodiment, the "boarding pass" may comprise a permanent integrated traveler identification document. Many airlines presently issue conventional plastic identification cards to members of their frequent-flyer clubs. Such cards may conveniently be produced in the form described above, but with a permanent customer identification number.

### 4.9 Rental Car Lot Security System

Most major rental car agencies commonly station guards at their parking lot exits. These guards verify that the driver of an exiting car is indeed an authorized renter.

Such a guard may be equipped with and use a terminal 15 in much the same manner as described above in connection with baggage-claim area security guards described above. In particular, the guard may utilize the terminal to scan the bar code on the customer's boarding pass and a vehicle identification code inscribed or mounted on the rental car (e.g., etched onto the windshield or body or printed on a label permanently affixed to the windshield or body). An RF link transmits these data to a rental car host computer 10.

If the car's driver is authorized to have the car, the host computer 10 sends a signal to cause a gate to be opened; otherwise, an alarm signal may be generated.

## Claims

1. A boarding security system comprising:
(a) check-in means for inputting identification (ID) data to checked-in passenger data storage means;
(b) said ID data including:
(1) passenger ID data encoded in at least one boarding pass, and
(2) luggage ID data encoded in at least one luggage tag, each said luggage tag corresponding to a said boarding pass;
(c) boarded-passenger data storage means linked with said checked-in passenger storage means;
(d) boarding-pass reader means for reading one or more said boarding passes and storing the passenger ID data encoded therein in said boarded-passenger data storage means,
(e) means for comparing the passenger ID data stored in said boarded-passenger data storage means with the luggage ID data stored in said checked-in passenger storage means, and
(f) means for generating an alarm signal if passenger ID data corresponding to any said luggage tag is not present in said boarded-passenger data storage means
wherein said passenger ID data and said luggage ID data are encoded in bar codes,
wherein at least one of said bar codes is a two-dimensional bar code,
wherein said check-in means includes means for accessing a data base of travel route information, and
wherein said check-in means includes means for generating a bar code.

2. The system of claim 1, wherein said check-in means includes means for reading a preexisting bar code.

3. The system of claim 1 or 2, wherein said boarding-pass reader means comprises a laser radiation emitter.

4. A passenger ID data record device for use in the boarding security system of any of claims 1-3, said device comprising:
(a) a machine readable electro-optical memory configured in accordance with an encoding scheme to encode data identifying a passenger;
(b) said encoding scheme conforming to a data organization scheme of a passenger data management system,
wherein said electro-optical memory comprises a bar code, and
further comprising a machine readable electro-optical memory configured in accordance with an encoding scheme to encode passenger itinerary data, and
configured in accordance with an encoding scheme to encode passenger handling data.

## Patentansprüche

1. Einstieg- oder Boarding-Sicherheitssystem bei dem folgendes vorgesehen ist:
a) Eincheckmittel zum Eingeben von Identifikationsdaten (ID) in "Eingecheckter Passagier"-Datenspeichermittel;
b) wobei die ID-Daten folgendes aufweisen:
1. Passagier-ID-Daten codiert in mindestens einem Boardingpaß, und
2. Gepäck-ID-Daten codiert in mindestens einem Gepäckanhänger, wobei jeder Gepäckanhänger dem erwähnten Boardingpass entspricht oder zugeordnet ist;
c) Speichermittel für Daten an Bord gegangener Passagiere (boarded passengers) verbunden mit den "Eingeckeckter-Passagier-Datenspeichermitteln";
d) Boardingpaß-Lesemittel zum Lesen eines oder mehrerer der Boardingpässe und Speichern der darin codierten Passagier-ID-Daten in den Speichermitteln für Daten der an Bord gegangenen Passagiere,
e) Mittel zum Vergleich der Passagier-ID-Daten die in den Speichermitteln für die an Bord gegangenen Passagiere gespeichert sind und zwar mit den Gepäck-ID-Daten, die in den Speichermitteln für eingecheckte Passagiere ("Eingecheckter Passagier"-Datenspeichermittel) gespeichert sind, und
f) Mittel zur Erzeugung eines Alarmsignals, wenn Passagier-ID-Daten entsprechend irgendeinem Gepäckanhänger nicht in den Datenspeichermitteln für an Bord gegangene Passagiere enthalten sind, wobei die Passagier-ID-Daten und die erwähnten Gepäck-ID-Daten in Barcodes codiert sind, wobei mindestens einer der Barcodes ein zweidimensionaler Barcode ist, und
wobei die Eincheckmittel Mittel aufweisen zum Zugriff einer zu Datenbasis von Reiserouteninformation, und
wobei die Eincheckmittel Mittel aufweisen zur Erzeugung eines Barcodes.

2. System nach Anspruch 1, wobei die Eincheckmittel Mittel aufweisen zum Lesen eines bereits existierenden Barcodes.

3. System nach Anspruch 1 oder 2, wobei die Boarding- oder Einsteigpaßlesemittel einen Laserstrahlungsermitter aufweisen.

4. Eine Passagier-ID-Daten-Aufzeichnungsvorrichtung zur Verwendung in dem Einsteig- oder Boarding-Sicherheitssystem nach einem der Ansprüche 1-3, wobei die Vorrichtung folgendes aufweist:
a) Einen maschinenlesbaren elektrooptischen Speicher konfiguriert entsprechend einem Codierschema zum Codieren der einen Passagier identifizierenden Daten;
b) wobei das Codierschema zu einem Datenorganisationsschema eines Passagierdatenmanagementsystems konform ist,
wobei der elektrooptische Speicher einen Barcode aufweist, und
wobei ferner ein maschinenlesbarer elektrooptischer Speicher vorgesehen ist, der entsprechend einem Codierschema zum Codieren der Passagierreiseplandaten konfiguriert ist, und der ferner entprechend einem Codierschema zum Codieren der Passagierhandhabungsdaten konfiguriert ist.

## Revendications

1. Système de sécurité d'embarquement comprenant:
(a) un moyen d'enregistrement pour introduire des données d'identification (ID) dans un moyen de stockage de données de passager enregistré;
(b) lesdites données ID comportant:
(1) des données ID de passager, codées dans au moins une carte d'embarquement, et
(2) des données ID de bagages, codées dans au moins une étiquette de bagage, chaque étiquette de bagage correspondant à une carte d'embarquement;
(c) un moyen de stockage de données de passager embarqué, relié audit moyen de stockage pour passager enregistré;
(d) un moyen formant lecteur de cartes d'embarquement pour lire un ou plusieurs desdites cartes d'embarquement et stocker les données ID de passager codées dans celles-ci, dans ledit moyen de stockage de données de passager embarqué,
(e) un moyen pour comparer les données ID de passager, stockées dans ledit moyen de stockage de données de passager embarqué, avec les données ID de bagage stockées dans ledit moyen de stockage pour passager enregistré, et
(f) un moyen pour générer un signal d'alarme si les données ID de passager, correspondant à l'une quelconque desdites étiquettes de bagage, ne sont pas présentes dans ledit moyen de stockage de données de passager embarqué
dans lequel
lesdites données ID de passager et lesdites données ID de bagage sont codées en codes à barres,
au moins l'un desdits codes à barres est un code à barres à deux dimensions
ledit moyen d'enregistrement comporte un moyen pour accéder à une base de données d'informations de trajet de déplacement, et
ledit moyen d'enregistrement comporte un moyen pour générer un code à barres.

2. Système selon la revendication 1, dans lequel ledit moyen d'enregistrement comporte un moyen pour lire un code à barres pré-existant.

3. Système selon la revendication 1 ou 2, dans lequel ledit moyen formant lecteur de cartes d'embarquement comprend un émetteur de rayonnement laser.

4. Dispositif d'enregistrement de données ID de passager destiné à être utilisé dans le système de sécurité d'embarquement de l'une quelconque des revendications 1-3, ledit dispositif comprenant:
(a) une mémoire électro-optique exploitable par une machine, configurée en fonction d'un schéma de codage pour coder des données identifiant un passager;
(b) ledit schéma de codage étant conforme à un schéma d'organisation de données d'un système de gestion de données de passager,
dans lequel ladite mémoire électro-optique comprend un code à barres, et
comprenant en outre une mémoire électro-optique exploitable par une machine, configurée en fonction d'un schéma de codage pour coder des données d'itinéraire de passager, et
configurée en fonction d'un schéma de codage pour coder des données de traitement de passager.
